(19) Europäisches Patentamt / European Patent Office / Office européen des brevets

(11) **EP 4 187 532 A1**

(12) **EUROPEAN PATENT APPLICATION**
published in accordance with Art. 153(4) EPC

(43) Date of publication:
**31.05.2023 Bulletin 2023/22**

(21) Application number: **21846639.9**

(22) Date of filing: **19.07.2021**

(51) International Patent Classification (IPC):
**G10G 1/04** $^{(2006.01)}$

(52) Cooperative Patent Classification (CPC):
**G10G 1/04**

(86) International application number:
**PCT/JP2021/026976**

(87) International publication number:
**WO 2022/019268 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2020 JP 2020125761**

(71) Applicant: **TMIK Inc.**
**Tokyo, 150-0011 (JP)**

(72) Inventor: **TAMAI, Kenji**
**Tokyo 150-0011 (JP)**

(74) Representative: **Grünecker Patent- und
Rechtsanwälte
PartG mbB
Leopoldstraße 4
80802 München (DE)**

(54) **MUSIC PROCESSING SYSTEM, MUSIC PROCESSING PROGRAM, AND MUSIC PROCESSING METHOD**

(57)    A newly composed musical piece is generated with original music as an input.

The present disclosure relates to a music processing system. And the music processing system of the present disclosure is a music processing system characterized by having musical-piece generating means which generates a musical piece by using a learning model which performed machine learning on the basis of input data including musical piece data in which a musical score of a musical piece constituted by one channel or more of melodies and one channel or more of chords is described and configuration information indicating attributes of elements constituting the musical piece of the musical piece data and shaping means which shapes the generated musical piece generated by the musical-piece generating means to a musically harmonized content.

FIG. 1

**Description**

[Technical Field]

The present disclosure relates to a music processing device, a music processing program, and a music processing method, which can be applied to composition of a new musical piece, for example.

[Background Art]

There has been an art described in Patent Literature 1, for example, as a system which supports easy generation of musical piece for a user who does not have knowledge for generating a musical piece.

The system described in Patent Literature 1 is a system which supports arrangement of original music by an operation of a user while a degree of arrangement of the original music is being changed. In the system described in Patent Literature 1, when a state of sound is to be defined by at least any one of three attributes (pitch, sound length, loudness) except sound emission timing, transition-probability data which sets a transfer probability from a certain state to a subsequent state are held in plural. In the system described in Patent Literature 1, since the degree of arrangement of the original music can be changed by selecting the transition-probability data to be selected, even a user who has little knowledge on music can arrange the original music while changing the degree of arrangement.

[Citation List]

[Patent Literature]

[PTL 1]
Japanese Patent Application Publication No. 2009-20323

[Summary of Invention]

[Technical Problem]

However, in the art described in Patent Literature 1, since the sound emission timing is excluded from the attributes of the transition-probability data, it is only arrangement of the original music and cannot be called composition.

Thus, a music processing system, a music processing program, and a music processing method which can generate a newly composed musical piece with the original music as an input are in demand.

[Solution to Problem]

A music processing system of a first invention is characterized by having (1) musical-piece generating means which generates a musical piece by using a learning model which performed machine learning on the basis of input data including musical piece data in which a musical score of a musical piece constituted by one channel or more of melodies and one channel or more of chords is described and configuration information indicating attributes of elements constituting the musical piece of the musical piece data, and (2) shaping means which shapes the generated musical piece generated by the musical-piece generating means to a musically harmonized content.

A music processing program of a second invention is a music processing program characterized by causing a computer to function as (1) musical-piece generating means which generates a musical piece by using a learning model which performed machine learning on the basis of learning data having musical piece data for learning in which a musical score of a musical piece constituted by one channel or more of melodies and one channel of more of chords is described, and (2) shaping means which shapes the generated musical piece generated by the musical-piece generating means to a musically harmonized content.

A third invention is characterized in that, in a music processing method performed by the music processing system, (1) the music processing system includes musical-piece generating means and shaping means, (2) the musical-piece generating means generates a musical piece by using a learning model which performed machine learning on the basis of learning data having musical piece data for learning in which a musical score of a musical piece constituted by one channel or more of melodies and one channel or more of chords is described, and (3) the shaping means shapes the generated musical piece generated by the musical-piece generating means to a musically harmonized content.

[Advantageous Effects of Invention]

According to the present disclosure, newly composed musical piece can be generated with original music as an input.

[Brief Description of Drawings]

[Fig. 1]

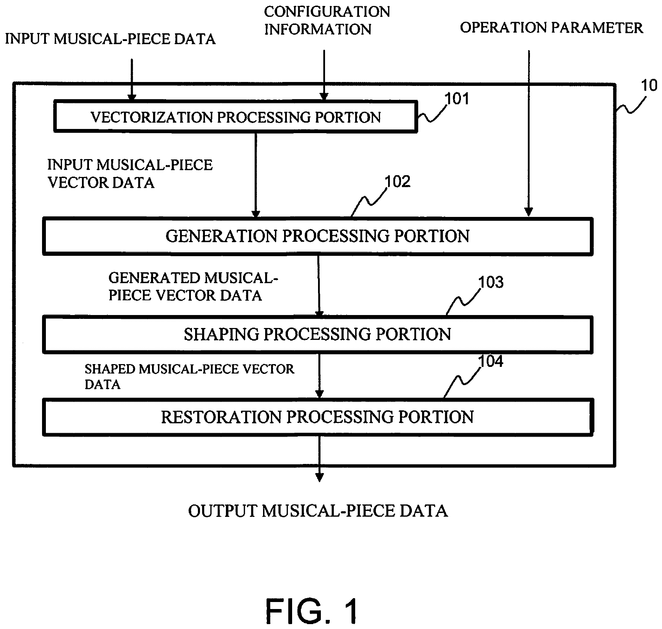

Fig. 1 is a block diagram illustrating a functional configuration of a music processing device according to a first embodiment.
[Fig. 2]

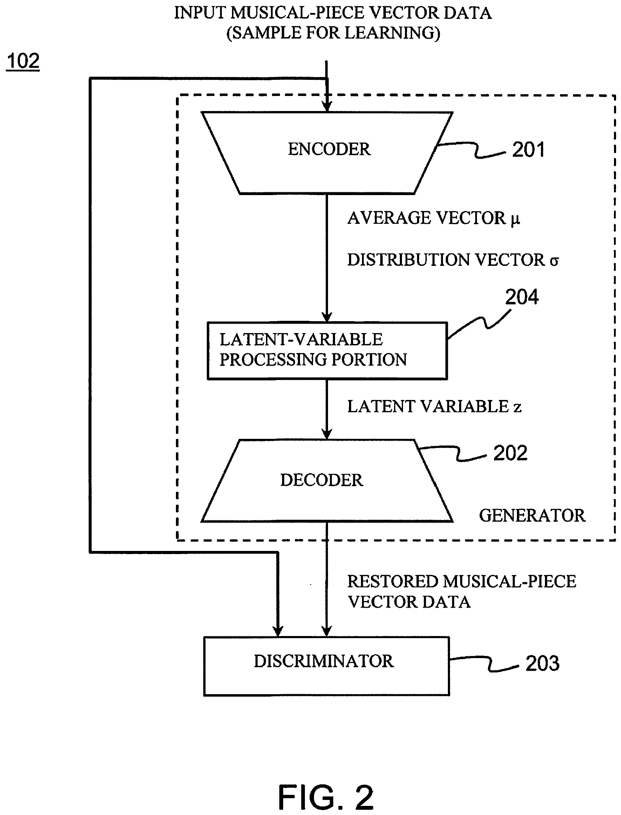

Fig. 2 is a block diagram illustrating a configuration example at learning of AI applied to a generation processing portion according to the first embodiment.
[Fig. 3]

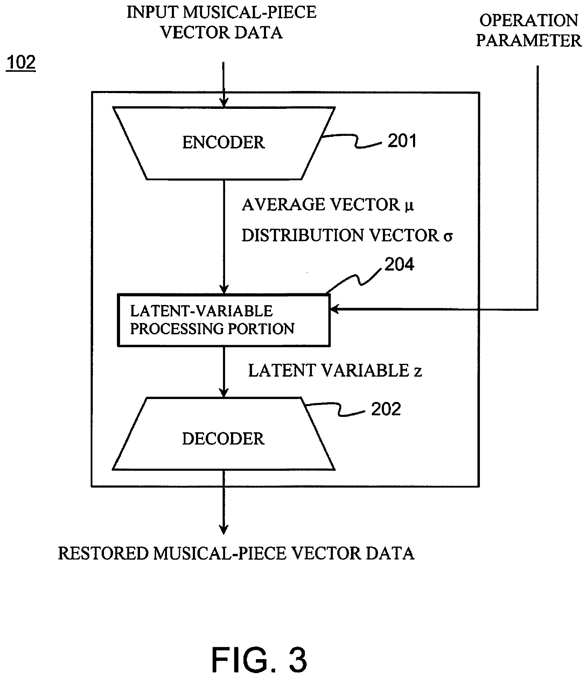

Fig. 3 is a block diagram illustrating a configuration example at generation of a musical piece in the generation processing portion according to the first embodiment.
[Fig. 4]

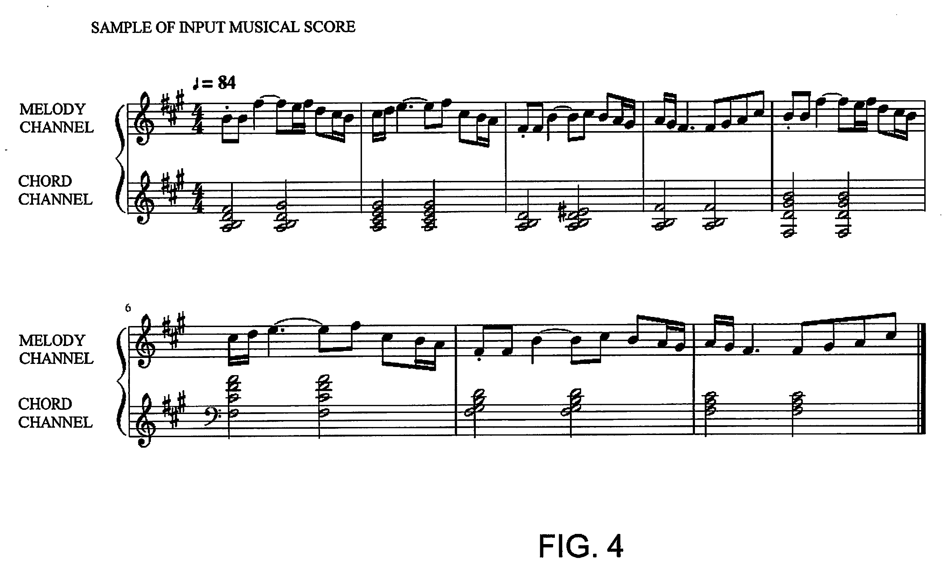

Fig. 4 illustrates an example in which an example of an input musical piece according to the first embodiment is expressed as a musical score in a score format.
[Fig. 5]

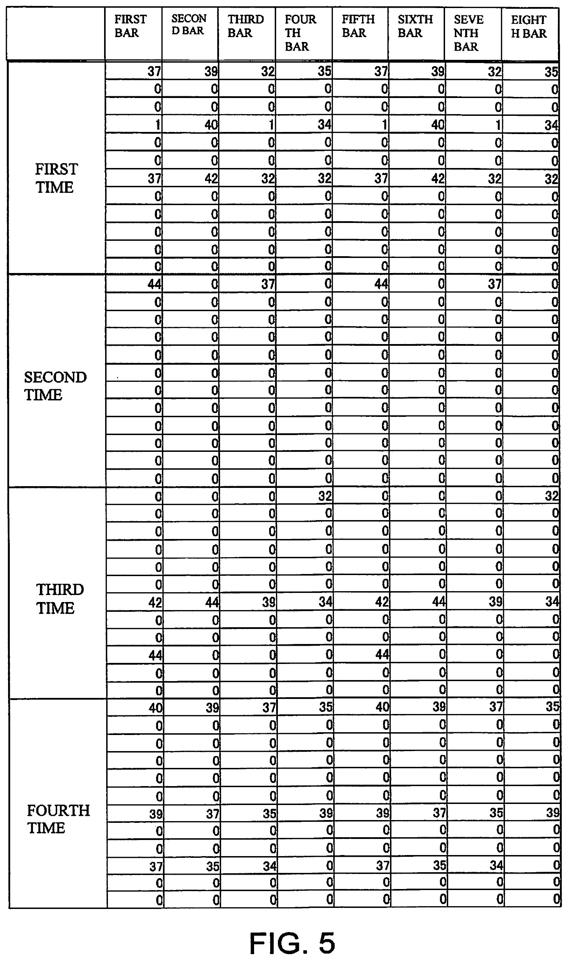

Fig. 5 is a diagram illustrating a content of conversion of a musical score of a melody channel in the example of the input musical piece according to the first embodiment to an ID (numerical value) in a table format.
[Fig. 6]

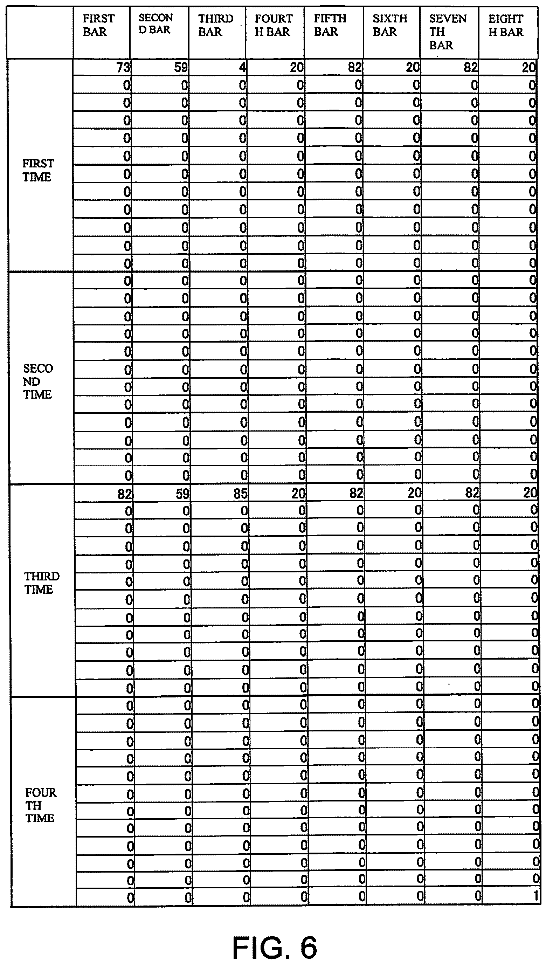

Fig. 6 is a diagram illustrating a content of conversion of a musical score of a chord channel in the example of the input musical piece according to the first embodiment to an ID (numerical value) in a table format.
[Fig. 7]

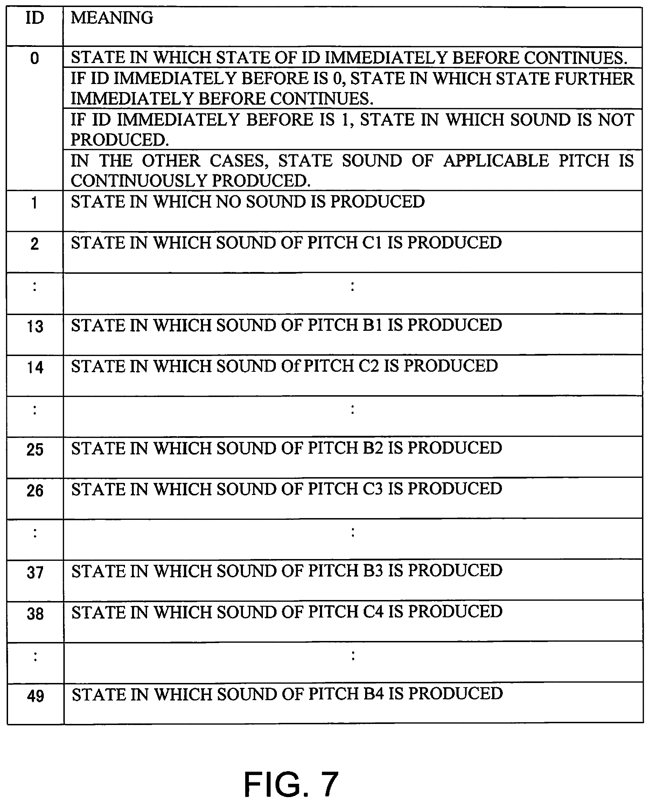

Fig. 7 is a diagram illustrating a conversion table for converting each note of the melody channel according to the first embodiment to an ID.
[Fig. 8]

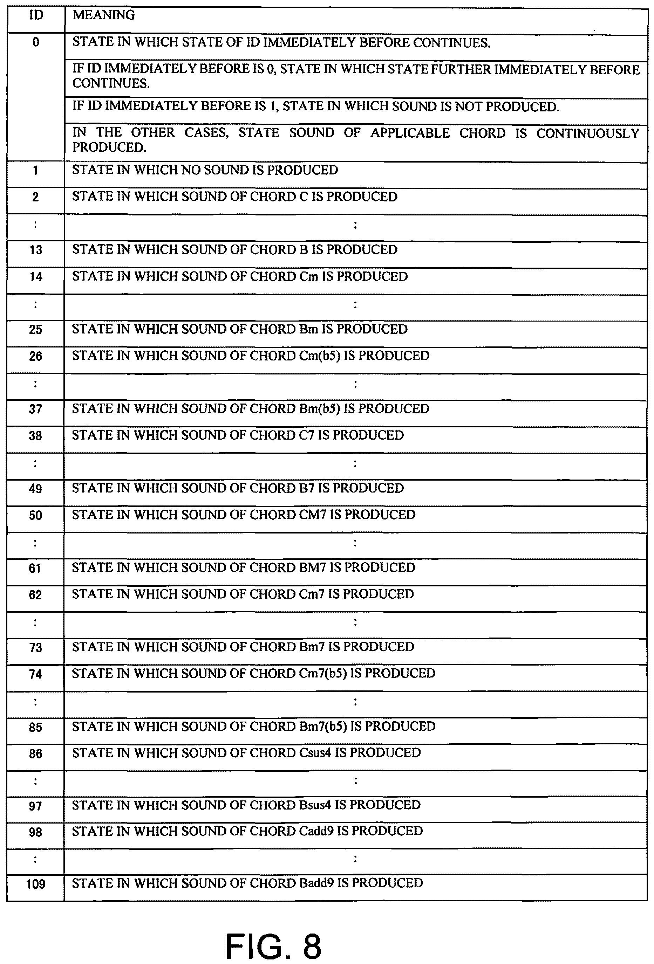

Fig. 8 is a diagram illustrating a conversion table for converting each chord of the chord channel according to the first embodiment to an ID.
[Fig. 9]

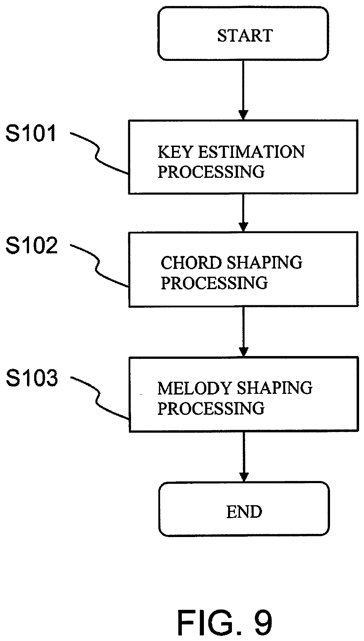

Fig. 9 is a flowchart illustrating a flow of shaping processing executed by a shaping processing portion according to the first embodiment.
[Fig. 10]

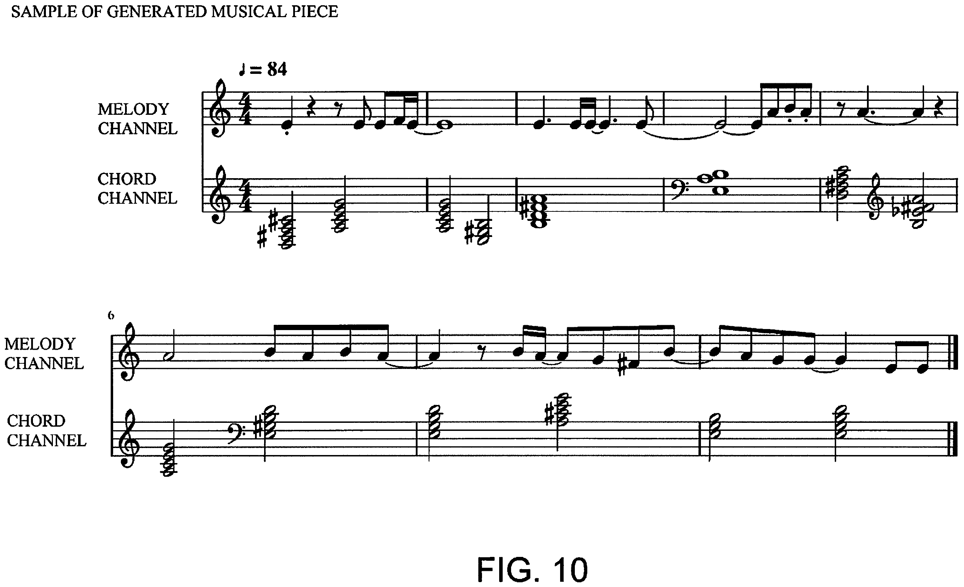

Fig. 10 is a diagram illustrating an example of a musical-piece before shaping (generated musical piece) processed in the first embodiment.
[Fig. 11]

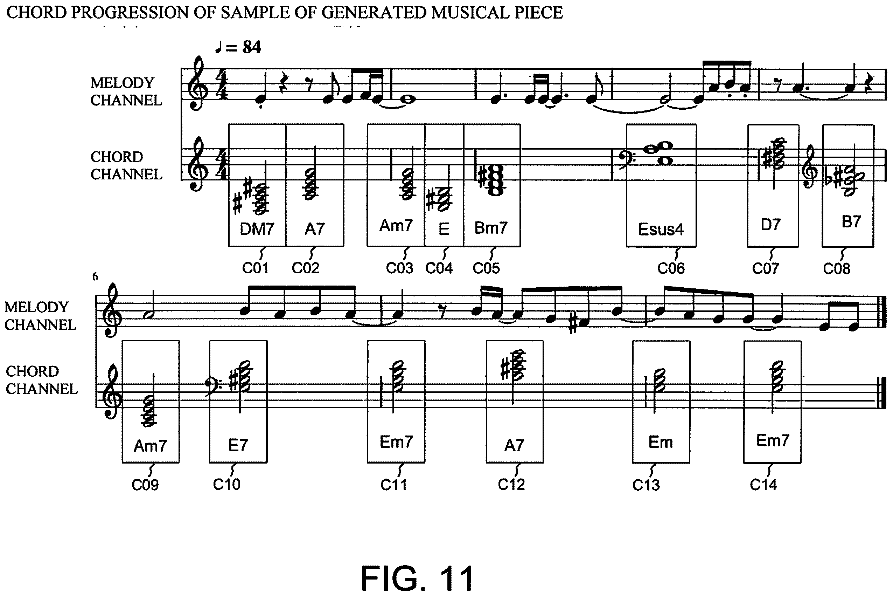

Fig. 11 is a diagram illustrating chord progression in the example of the musical-piece before shaping processed in the first embodiment.
[Fig. 12]

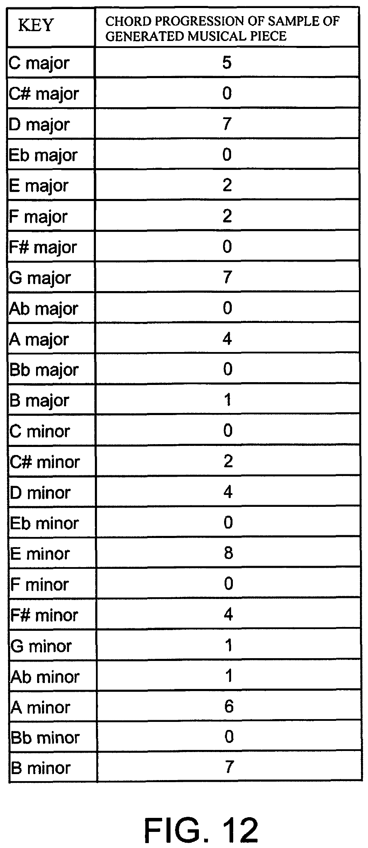

Fig. 12 is a diagram illustrating a count result of each key by the shaping processing portion according to the first embodiment.
[Fig. 13]

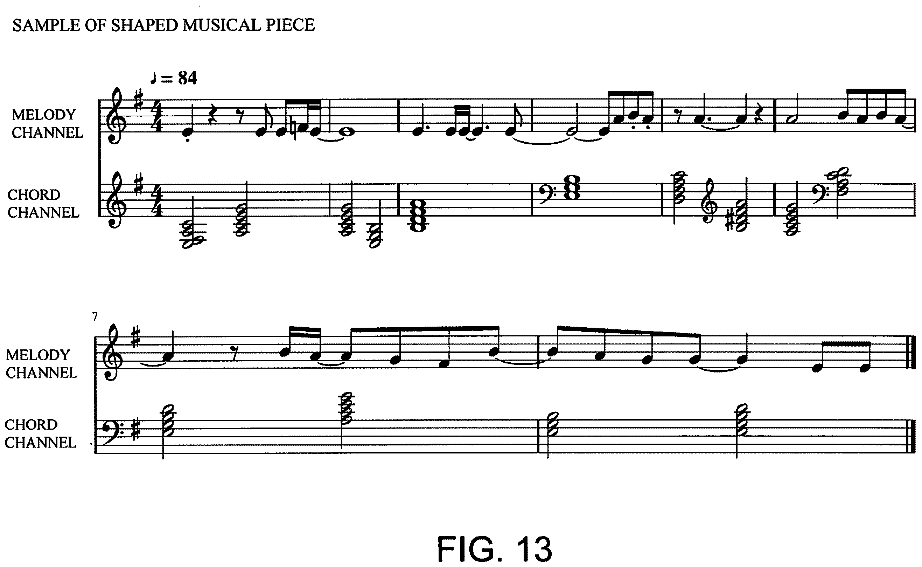

Fig. 13 is a diagram illustrating an example of a chord-shaped musical piece processed in the first embodiment.
[Fig. 14]

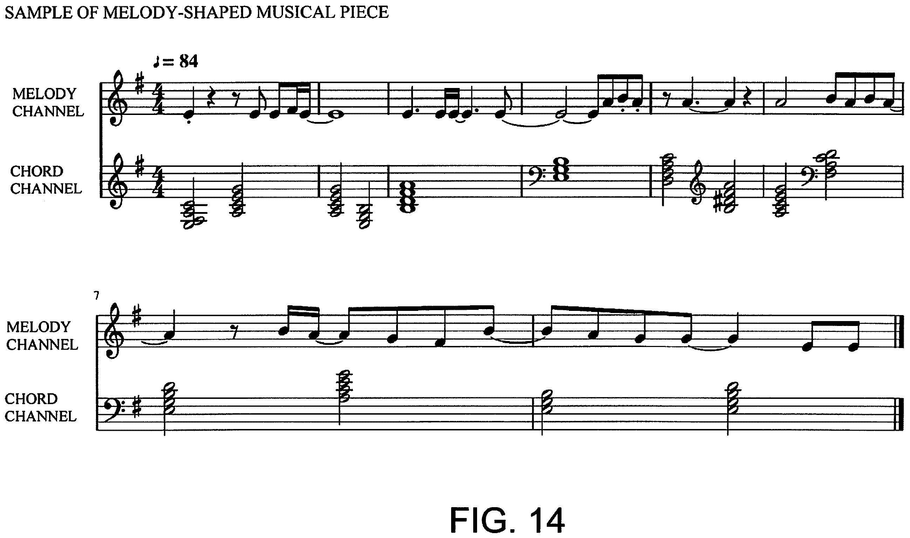

Fig. 14 is a diagram illustrating an example of a melody-shaped musical piece processed in the first embodiment.
[Fig. 15]

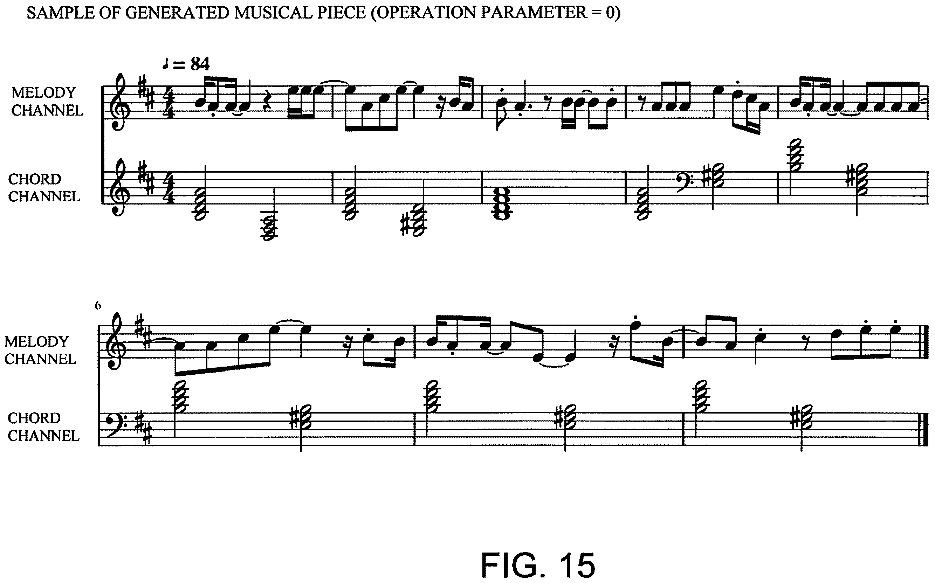

Fig. 15 is a diagram illustrating an example of a generated musical piece when [operation parameter = 0] is set in the first embodiment.
[Fig. 16]

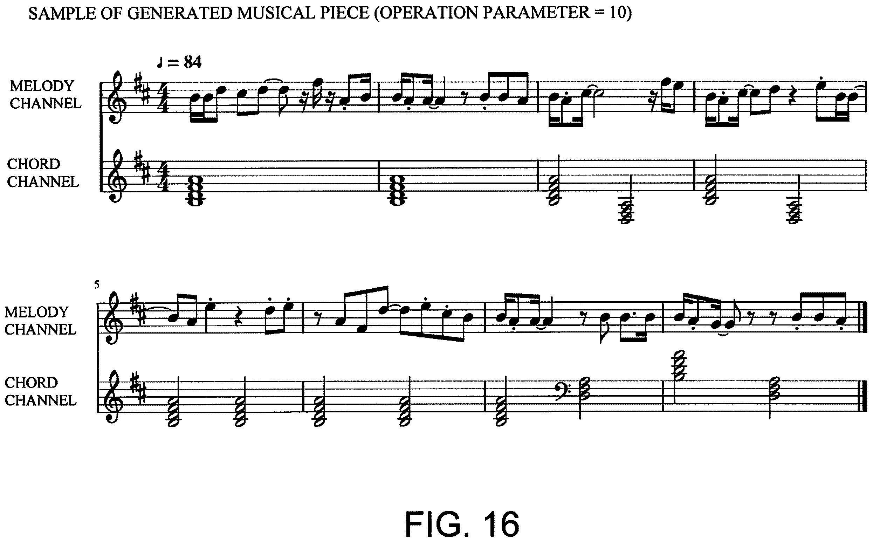

Fig. 16 is a diagram illustrating an example of a generated musical piece when [operation parameter = 10] is set in the first embodiment.
[Fig. 17]

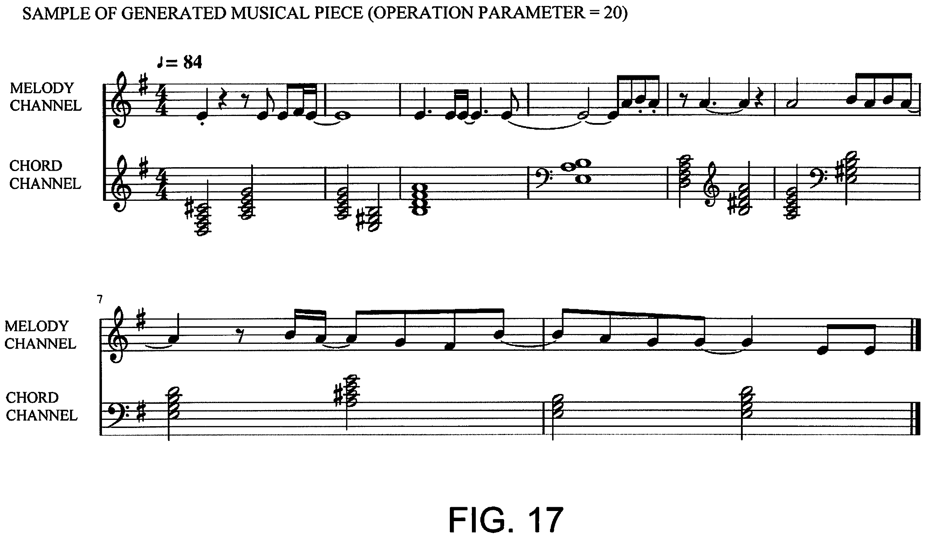

Fig. 17 is a diagram illustrating an example of a generated musical piece when [operation parameter = 20] is set in the first embodiment.

[Fig. 18]

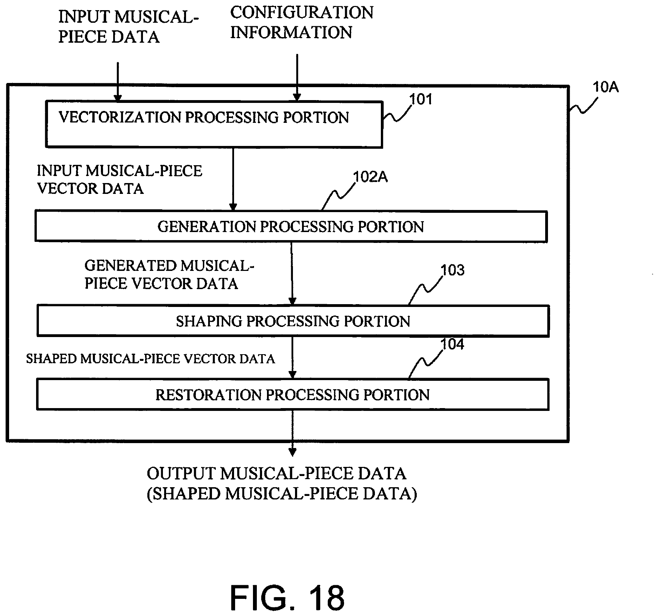

Fig. 18 is a block diagram illustrating a functional configuration of a music processing device according to a second embodiment.
[Fig. 19]

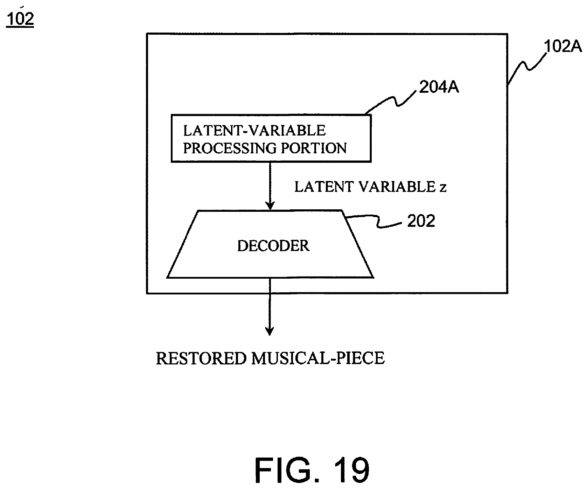

Fig. 19 is a block diagram illustrating a configuration example when a musical piece is generated in the generation processing portion according to the second embodiment.

[Description of Embodiments]

(A) First Embodiment

Hereinafter, a first embodiment of a music processing system, a music processing program, and a music processing method according to the present disclosure will be described in detail by referring to the drawings.

(A-1) Configuration of First Embodiment

Fig. 1 is a block diagram illustrating an entire configuration of a music processing system 10 of this embodiment.
The music processing system 10 is a system which newly generates and outputs a musical piece.
The music processing system 10 may be entirely configured by hardware (dedicated chips or the like, for example) or may be partially or entirely configured by software (programs). The music processing system 10 may be configured by installing a program (including the music processing program of the embodiment) in a computer having a processor and a memory, for example. Moreover, there is no limitation on the number of the computers configuring the music processing system 10, which may be realized by disposing the program or data in a plurality of units of the computers in a dispersed manner.
When input musical-piece data and data including configuration information (hereinafter, also called "input data") and an operation parameter are input, the music processing system 10 executes processing of generating and outputting a new musical piece by using the input data. Hereinafter, the musical piece data output by the music processing system 10 will be called "output musical-piece data".
Subsequently, the input musical-piece data/output musical-piece data will be described.
In this embodiment, a data format of the input musical-piece data/output musical-piece data (format of input/output music data) will be described as a format of a standard MIDI file (Standard Musical Instrument Digital Interface File; hereinafter called "SMF"), but the data format applied to the input musical-piece data/output musical-piece data is not limited to the standard MIDI file format but data in formats of various types of performance information (musical score data) can be applied. Moreover, in the music processing system 10, the data format applied to the input musical-piece data/output musical-piece data does not have to be a format of the performance information such as SMF but may be direct acoustic signal formats such as WAV, MP3 and the like. In the music processing system 10, in the case where the input musical-piece data/output musical-piece data is in a format of an acoustic signal, the input musical-piece data which is input is converted to data in a format of the performance information such as SMF or the like and is processed, and the data converted to the format of the acoustic signal is output as the output musical-piece data. Since various types of processing can be applied to processing of conversion of the data in the format of the acoustic signal to the data in the format of the performance information and processing of conversion of the data in the format of the performance information to the data in the format of the acoustic signal (music reproduction processing) in the music processing system 10, description of details will be omitted.
Note that, in this embodiment, description will be made by assuming that the input musical-piece data and the output musical-piece data have the same data format (SMF format), but it is natural that the formats may be different, respectively.
In this embodiment, units of musical pieces processed in the music processing system 10 (length, the number of channels (channels on MIDI) and the like, for example) are not limited. That is, in this embodiment, the length of the unit of a musical piece processed in the music processing system 10 may be a fixed length (predetermined number of bars, for example) or may be a variable length. In this embodiment, description will be made by assuming that a length of a unit of a musical piece processed in the music processing system 10 is the fixed length of 8 bars in 4/4 time equivalent (32 beats; in the case of 2/2 time, 16 bars) . Moreover, in this embodiment, the number of channels of the musical piece processed in the music processing system 10 is assumed to be configured by 1 channel of melody and 1 channel of chord (chord of accompaniment with respect to melody), totaling in 2 channels in description. Hereinafter, a melody channel configuring the musical piece is called a "melody channel" and a chord channel as a "chord channel". The numbers of the melody channels and the chord channels in a musical piece processed in the music processing system may be plural (two or more), respectively.
Subsequently, the "configuration information" will be described.

The configuration information is a parameter indicating an attribute (type) of an element in each section in the input musical piece. In an example of this embodiment, any one of attributes of intro, a verse A, a bridge B, and a hook is applied as an element of the input musical piece. The applicable attributes of elements are not limited to the above, but various formats (a format of a first theme, a second theme or the like, for example) may be applied.

The configuration information may be configured as data separate from the input musical-piece data, but may be realized by embedding information corresponding to the configuration information in a marker of the SMF. In the SMF, a marker is prepared as a field in which a user can write an arbitrary text. Thus, it may be such a format that a text corresponding to the configuration information (text such as intro, a verse A, a bridge B, and a hook, for example) is written in the marker of the input musical-piece data (SMF data).

For example, in the SMF data supplied as the input musical-piece data, when an "intro" is set to the marker at the first timing (position) in the first bar and a "verse A" is set to the marker at the first timing of the fifth bar, in the music processing system 10, a section from the first to fourth bars is recognized as the "intro", and a section at the fifth bar and after (fifth to eight bars) as the verse A. Moreover, in the SMF data supplied as the input musical-piece data, for example, if the "verse A" is set to the marker at the first timing (position) of the first bar and the other markers are not set, the music processing system 10 recognizes all the sections (first to eighth bars) as the "verse A". As described above, the attribute of the element for each section can be written in the marker in the SMF data.

When the configuration information is described separately from the SMF data, a specific format is not limited but it is only necessary that the attribute of the element for each section of the input musical piece is described. For example, the configuration information may be described by a column of information of a pair of information indicating the timing (position) and the attribute of the element (texts or numerical values corresponding to the verse A, the bridge B, and the intro, for example) similarly to the marker of the SMF. Moreover, when the same attribute is to be applied to all the sections of the input musical piece, information related to timing is not necessary for the configuration information, and only parameters or texts corresponding to the attributes may be set.

Subsequently, an "operation parameter" will be explained.

The operation parameter is a parameter which can be used as an interface for accepting an operation of characteristics of a musical piece generated by a user in the music processing system 10. In this embodiment, explanation will be made by assuming that the operation parameter is expressed by one numerical value (one-dimensional parameter). However, the operation parameter is not limited and may be expressed by a plurality of numerical values (multi-dimensional parameter) or may be expressed in a format other than the numerical values (flag format such as TRUE/FALSE, for example). Details of the operation parameter will be described later.

Subsequently, internal configuration of the music processing system 10 will be explained.

As shown in Fig. 1, the music processing system 10 has a vectorization processing portion 101, a generation processing portion 102, a shaping processing portion 103, and a restoration processing portion 104.

The vectorization processing portion 101 executes processing of converting the data including the input musical-piece data and the configuration information to vector data in a format suitable for processing in the generation processing portion 102 in a subsequent stage (hereinafter, referred to as "input musical-piece vector data"). Then, the vectorization processing portion 101 supplies the acquired input musical-piece vector data to the generation processing portion 102. A specific format of the input musical-piece vector data will be described later.

The generation processing portion 102 generates vector data corresponding to a new musical piece (hereinafter, referred to as a "generated musical-piece") based on the input musical-piece vector data and the operation parameter (data in a format similar to that of the input musical-piece vector data; hereinafter referred to as "generated musical-piece vector data") by processing of a generated model using AI and outputs it. The generation processing portion 102 supplies the generated musical-piece vector data to the shaping processing portion 103. Detailed configuration of the generation processing portion 102 will be described later.

The shaping processing portion 103 executes processing of shaping of a musical piece of the generated musical-piece vector data to a musically harmonized content (unification of entire keys, adjustment of scales between the melody and the chord or the like, for example) and outputs it as "shaped musical-piece vector data".

Since a musical piece of the generated musical-piece vector data has a content as it was output from the AI (generation processing portion 102), there can be such a case in which the piece is not in harmony musically (in terms of music theory) such that the keys are not in tune or a melody and a chord do not match in scale or the like. Thus, in the music processing system 10, a musically shaped musical piece is output by providing the shaping processing portion 103. Note that, if the generated musical-piece vector data output from the AI (generation processing portion 102) does not have to be shaped (if it is not necessary on a user side or if a musically shaped content is generated from the beginning, for example), it may be so configured that the configuration of the shaping processing portion 103 is excluded, and the generated musical-piece vector data is supplied as it is to the restoration processing portion 104.

The restoration processing portion 104 restores (converts) the shaped musical-piece vector data to music data in a predetermined format (in the SMF format in this embodiment) and outputs it as "output musical-piece data".

Subsequently, the configuration example of the AI applied to the generation processing portion 102 will be explained.

In the generation processing portion 102, the AI is configured on the basis of a learning model learned by machine learning on a deep-learning basis. Specifically, in the generation processing portion 102, a learning model which performed learning in a framework of VAE (Variational Auto Encoder) is acquired.

The platform (middleware) configuring the AI used for the generation processing portion 102 is not limited, and various platforms can be applied. In the example of this embodiment, explanation will be made below by assuming that Python (registered trademark) and libraries around it are used for the configuration in the generation processing portion 102.

Fig. 2 is a diagram illustrating a configuration example at learning (when a learning model is to be acquired) of the AI applied to the generation processing portion 102.

As shown in Fig. 2, in the generation processing portion 102, at least an encoder 201 (encoder), a decoder 202 (decoder), a discriminator 203 (discriminator) and a latent-variable processing portion 204 operate at the learning.

The encoder 201 acquires and outputs an average vector $\mu$ of the latent variable and a distribution vector $\sigma$ indicating probability distribution on the basis of the input musical-piece vector data.

At the learning, the latent-variable processing portion 204 acquires a value obtained by adding a noise according to a standard deviation $\sigma$ to the average vector $\mu$ in accordance with the framework of the VAE as a latent variable z (sample of the latent variable) and supplies it to the decoder 202. At this time, the latent-variable processing portion 204 may acquire the latent variable z in accordance with the following formula (1), for example. For example, in the formula (1), I = 1 may be set.

$$z = \mu + \varepsilon\sigma \quad (\varepsilon \sim N (0, I)) \quad \dots \quad (1)$$

For example, if the latent variable z is a 256-dimensional vector, a source code (code when described in Python) for the latent-variable processing portion 204 to acquire the latent variable z at the learning can be "$\mu$ + numpy.random.normal (loc=0.0, scale=1*$\sigma$, size=256)".

The decoder 202 outputs the vector data (hereinafter, referred to as "restored musical-piece vector data") obtained by the restoration processing of the latent variable z. In the VAE framework shown in Fig. 2, the encoder 201 and the decoder 202 constitute a generator. The discriminator 203 identifies whether the restored musical-piece vector data is generated by the generator or not. In the generation processing portion 102, the generator performs learning so that the discriminator 203 cannot find that it is the vector data generated by the generator. In Fig. 2, illustration is omitted so as to facilitate the explanation, but at the learning in Fig. 2, the generator executes learning processing by using a discrimination result of the discriminator 203 and LOSS (a difference between the input musical-piece vector data and the restored musical-piece vector data).

At the learning of the generation processing portion102, samples (input musical-piece vector data) used for the learning may be sequentially supplied from the vectorization processing portion 101. The number of the samples used for the learning of the generation processing portion 102 is not limited, but approximately 1000 to 3000 samples may be applied. Moreover, at the learning of the generation processing portion 102, approximately 1000 sessions of the learning processing (learning processing for approximately 1000 times until the restored musical-piece vector data is generated on the basis of the latent variable z) may be executed for each of the samples (one input musical-piece vector data).

By changing a ratio of a type (pops, jazz and the like, for example), an artist and the like of musical pieces to be a basis of samples used for the learning of the generation processing portion 102 (input musical-piece vector data), characteristics of a musical piece to be generated by the generator can be also changed. That is because, in the case of the learning of the AI by the VAE framework, basically, a range in which the latent variables z are distributed becomes distribution according to the sample used for the learning.

In this embodiment, the latent variable z is supposed to have the 256-dimensional fixed size, but a size of z is not limited to that. The size of the latent variable z is preferably changed in accordance with a size of the vector data (input musical-piece vector data/restored musical-piece vector data) to be processed.

Fig. 3 is a diagram illustrating a configuration example when the generated musical-piece vector data is generated (hereinafter, referred to as "at generation of a musical piece") by using a model having learned by the AI applied to the generation processing portion 102.

In Fig. 3, the same signs or corresponding signs are given to the same parts or corresponding parts in Fig. 2 described above.

As shown in Fig. 3, in the generation processing portion 102, at least the encoder 201, the decoder 202, and the latent-variable processing portion 204 operate at the generation of a musical piece.

Since the operations of the encoder 201 and the decoder 202 themselves are the same as those at the learning, detailed explanation will be omitted.

The latent-variable processing portion 204 at the generation of a musical piece is different from the learning in a point that a noise according to the distribution vector σ and the operation parameter c is mixed in (added to) the latent variable z.

Specifically, the latent-variable processing portion 204 can correct the noise to a value in which the operation parameter c is reflected in the latent variable z by setting I = c in the formula (1) described above at the generation of a musical piece. A range that can be set for the operation parameter c is not limited, and it may be adjusted by the user. For example, the operation parameter c may be settable within a range from 0 to 10 or may be changeable by a predetermined grid width (10, for example) within a range from 0 to 50. Moreover, in the latent-variable processing portion 204, a method of accepting an input from the user for a value of the operation parameter c (configuration of a device or an operation screen for accepting the input, for example) is not limited.

For example, when the latent variable z is a 256-dimensional vector, the source code (code when described in Python) for the latent-variable processing poritn 204 to acquire the latent variable z at the generation of a musical piece can be "μ + numpy.random.normal (loc=0.0, scale=c*σ, size=256)".

(A-2) Operation of First Embodiment

Subsequently, an operation of the music processing system 10 (music processing method according to the embodiment) in the first embodiment having the configuration as above will be explained.

First, details of processing of the vectorization processing portion 101 will be explained.

As described above, in the music processing system 10, processing is executed by the unit of a musical piece of 8 bars (32 beats) in two channels.

Fig. 4 illustrates an example in which the example of the input musical piece is expressed as a musical score in a score format.

Note that the input musical score illustrated in Fig. 4 is a verse from "Polovtsian Dances" composed by Alexander Borodin.

In Fig. 4, a musical score of a melody channel and a chord channel of the input musical piece is expressed in the score format. Note that, here, musical instruments (instrument names on the MIDI) of the channels in each musical piece are supposed to be a piano group.

First, the vectorization processing portion 101 encodes an array of notes of each channel in the input musical-piece data (into numerical sequences) by the unit of a 48th note (unit of one-twelve time) . Here, since the input musical-piece data has 8 bars (32 beats), when each channel is encoded, 8 x 48 = 384 code strings are generated. Here, each code is supposed to be expressed by one numerical value (hereinafter, simply referred to as an "ID").

Fig. 5 illustrates a content obtained by converting (encoding) the musical score of the melody channel in the input musical piece shown in Fig. 4 to an ID in a table format.

Fig. 6 illustrates a content obtained by converting (encoding) the musical score of the chord channel in the input musical piece shown in Fig. 4 to an ID in a table format.

In the tables in Fig. 5, Fig. 6, IDs (slots for setting 48 IDs) for one bar (four time) in one column are disposed.

Fig. 7 illustrates an example of a conversion table for converting each note in the melody channel to an ID.

As shown in Fig. 5, Fig. 7, in the melody channel, an ID (ID of 2 or after) corresponding to a height of a pitch is set to timing (slot) at a head of each note, and an ID of "1" is set to the timing (slot) of a head of a rest. Moreover, as shown in Fig. 5, Fig. 7, in the melody channel, a code of "0" for continuing a state immediately before is set to timing (slot) other than the timing of the head of a note or a rest. Specifically, the ID of "0" means, as shown in Fig. 7, processing of a "state in which the state of the ID immediately before continues", "if the ID immediately before is 0, the state further immediately before continues.", "if the ID immediately before is 1, a state in which sound is not produced.", and "in the other cases, a state in which sound of an applicable pitch is continuously produced.".

Fig. 8 illustrates a conversion table for converting each note in the chord channel to an ID.

As shown in Fig. 6, Fig. 8, in the chord channel, an ID (ID of 2 or after) corresponding to a type of a chord (combination of chords) is set to timing (slot) at a head of each chord (chord), and an ID of "1" is set to the timing (slot) of a head of a rest. In the chord channel, a lowest sound of a pitch is C2 in the international type in MIDI and a highest sound is a sound corresponding to B5. Moreover, as shown in Fig. 6, Fig. 8, in the chord channel, a code of "0" for continuing a state immediately before is set to timing (slot) other than the timing of the head of a note or a rest. Specifically, the code of "0" means, as shown in Fig. 8, processing of a "state in which the state of the ID immediately before continues", a "state in which the state of the ID immediately before continues.", "if the ID immediately before is 0, the state further immediately before continues.", "if the ID immediately before is 1, a state in which sound is not produced.", and "in the other cases, a state in which sound of an applicable chord is continuously produced.".

As described above, the vectorization processing portion 101 can acquire One-Hot Vector (data in a data format suitable for processing of the AI) corresponding to each channel by conversion of each channel in the input musical-piece data to numerical sequences. In the following, a mass of encoded (converted into ID/converted into numerical sequences/One-Hot Vectorized) data for each channel will be called "encoded input musical-piece data". The encoded input musical-piece data includes numerical sequences of the melody channel (384 ID columns/code string/One-Hot Vector) and the numerical sequences of the chord channel (384 ID columns/numerical sequence/One-Hot Vector). In the following, each numerical value of the numerical sequence in the melody channel is expressed as Mi (i indicates a slot number from 1 to 384 (order in time series)), and each numerical value of the numerical sequence in the chord channel is expressed as Ci. Specifically, the numerical sequences of the melody channel are expressed as M1, M2, M3, ... M384, and the numerical sequences of the chord channel as C1, C2, C3, ... C384.

Subsequently, processing in which the vectorization processing portion 101 encodes (conversion to numerical sequences) the configuration information will be explained.

As described above, the vectorization processing portion 101 can grasp the attributes (intro, a verse A, a bridge B, a hook and the like, for example) of the element of each section of the input musical piece by the configuration information. Thus, the vectorization processing portion 101 grasps the attributes of the element corresponding to each slot of the input musical piece and acquires the numerical sequence setting the numerical value (code) corresponding to the element (element attribute) to each slot.

Assignment of the numerical value (code) corresponding to the attribute of each element is not limited. In this embodiment, it is assumed that the numerical value corresponding to each element is assigned within a range from 0 to 50. Specifically, in the example of this embodiment, explanation will be made by assuming that any one of 10 to 19 is assigned as a numerical value corresponding to the verse A, any one of 20 to 29 as the numerical value corresponding to the bridge B, any one of 30 to 39 as the numerical value corresponding to the hook, and any one of 40 to 49 as the numerical value corresponding to the intro. For example, it may be so configured that, in the vectorization processing portion 101, the numerical value corresponding to the verse A is 10, the numerical value corresponding to the bridge B is 20, the numerical value corresponding to the hook is 30, and the numerical value corresponding to the intro is 40. When the attributes of the elements are different, characteristics by the attributes of the elements can be made easily discriminable by the AI by providing a certain degree of interval between the numerical values. Moreover, in the case where the sections with the same elements occur in plural in the input musical piece (when a sequence of the verse A, the bridge B, and the verse A continues, for example), the vectorization processing portion 101 may set different numerical values to the sections occurring in duplication. In the case in which a sequence of the verse A, the bridge B, and the verse A continues, for example, the setting may be such that 30 for the section of the first verse A and 31 for the section of the second verse A. Note that in this embodiment, a parameter corresponding to the constituent element has one dimension but may be constituted multi-dimensionally. For example, assuming that three parameters F, G, H are set as parameters corresponding to the constituent elements, the verse A may be defined as "F = 1, G = 0, H = 0", the bridge B as "F = 0, G = 1, H = 0", and the hook as "F = 0, G = 0, H = 1".

As described above, in the vectorization processing portion 101, a numerical value corresponding to the attribute of the element can be set to each of the slots (384 slots) of the input musical piece on the basis of the configuration information. In the following, it is assumed that each numerical value of the numerical sequence based on the configuration information is expressed as Ei. Specifically, the numerical sequence of each slot based on the configuration information is expressed as E1 to E384.

And the vectorization processing portion 101 executes processing of assembling vector data (matrix expression) suitable for the AI processing for the numerical sequence (numerical sequences of the melody channel and the chord channel) constituting the encoded input musical-piece data and the numerical sequence based on the configuration information.

In this case, the matrix expression as the expression (2) below generated by the vectorization processing portion 101 may be acquired as the vector data. The expression (2) is a matrix expression with data for 1 slot (48th note) in one column. That is, in the expression (2), the i-th row (i is an integer of any one from 1 to 384) is constituted by (Mi, Ci, Ei).

[Formula 1]

$$\begin{pmatrix} M1 & C1 & E1 \\ M2 & C2 & E2 \\ \vdots & \vdots & \vdots \\ M384 & C384 & E384 \end{pmatrix} \quad \cdots \quad (2)$$

In this embodiment, explanation will be made by assuming that all the vector data (input musical-piece vector data, restored musical-piece vector data, and the like) processed by the AI (generation processing portion 102) in the music processing system 10 is in the format as in the expression (2). The format of the vector data is not limited to expression (2) but a specific order of sequences and configuration of each row may adopt the other formats (a format in which one row is constituted by the unit of 24th note, for example) as long as they are constituted by the same numerical sequences.

Moreover, as described above, in this embodiment, the numerical sequences of the melody channel and the chord channel in the input musical-piece vector data are converted into numerical sequences (IDs) by the unit of 48th note but they are substantially considered to be data in a format of a musical score (performance information) similarly to the original input musical-piece data (SMF data). Therefore, in the music processing system 10, it may be so configured that the data in the form of numerical sequences may be supplied as the input musical-piece data from the beginning for the data of the melody channel and the chord channel. Moreover, in the music processing system 10, it may be supplied in the format of the input musical-piece vector data from the beginning. In that case, in the music processing system 10, the vectorization processing portion 101 may be excluded.

Subsequently, details of shaping processing by the shaping processing portion 103 will be explained.

As described above, the shaping processing portion 103 executes the shaping processing for the generated musical-piece vector data and outputs it as the shaped musical-piece vector data. Moreover, in the following, a musical piece corresponding to the generated musical-piece vector data is called a "musical-piece before shaping" and a musical piece of the shaped musical-piece vector data as a "shaped musical piece".

In this embodiment, since the musical-piece before shaping has a length of approximately 8 bars (32 beats), the shaping processing portion 103 is supposed to execute processing of unifying keys over the entirety of the musical-piece before shaping as the shaping processing. It may be so configured that the shaping processing portion 103 divides the musical-piece before shaping into a plurality of sections and separately determines a unified key for the respective sections and then, executes the subsequent shaping processing.

In this embodiment, explanation will made by assuming that the shaping processing portion 103 executes the shaping processing in the state of the vector data (generated musical-piece vector data) but by it may be so configured that the order of the shaping processing portion 103 and the restoration processing portion 104 is switched, and the shaping processing is executed after restoration to the format of the SMF data.

Fig. 9 is a flowchart illustrating a flow of the shaping processing executed by the shaping processing portion 103.

First, the shaping processing portion 103 executes processing of estimating a key suitable as the unified key for the musical-piece before shaping (hereinafter, referred to as "processing of key estimation) and determines a key for unification (hereinafter, referred to as a "unified key") in accordance with a result of the key estimation processing (S101).

Subsequently, the shaping processing portion 103 executes processing of shaping such that the chord channel of the musical-piece before shaping has only generally used chords in the unified key (hereinafter, referred to as "chord shaping processing) (S102). Hereinafter, a musical piece after the chord shaping processing is executed for the musical-piece before shaping is called a "chord-shaped musical piece".

Subsequently, the shaping processing portion 103 executes processing of shaping each note in the melody channel of the chord-shaped musical piece so as to be harmonized with the chords of the chord channel (hereinafter, referred to as "melody shaping processing") and acquires it as the shaped musical piece (S103). Specifically, the shaping processing portion 103 executes processing of adjusting (shaping) a pitch so as to match a scale (hereinafter, referred to as a "chord scale") corresponding to the chord (hereinafter, referred to as a "corresponding chord") of the chord channel sounding at the same time (sound is produced in the same time series) for each note of the melody channel of the chord-shaped musical piece.

Subsequently, details of the key estimation processing at Step S101 will be explained.

The shaping processing portion 103 estimates which key in all the 24 keys ((major keys x 12 notes) + (minor keys x 12 notes) = 24) is suitable as the unified key of the musical-piece before shaping in the key estimation processing.

In this embodiment, the shaping processing portion 103 counts how many chords included in the musical-piece before shaping match the chords used in each key and estimates (determines) that the key with the largest number of chords matching those chords as the suitable unified key.

Fig. 10 is a diagram illustrating an example of the musical-piece before shaping (generated musical piece) in a score format.

Fig. 11 is a diagram illustrating chord progression in the musical-piece before shaping shown in Fig. 10.

In Fig. 11, codes of C01 to C14 are given in order from the beginning to each of 14 chords constituting the musical-piece before shaping. In Fig. 10, chord names are given to the codes C01 to C14. As shown in Fig. 10, the chords of the codes C01 to C14 are [DM7], [A7], [Am7], [E], [Bm7], [Esus4], [D7], [B7], [Am7], [E7], [Em7], [A7], [Em], [Em7].

The shaping processing portion 103 counts how many diatonic chords in each key (each key in all the 24 keys) are included in each note constituting each chord of the musical-piece before shaping. A count result by the shaping processing portion 103 at this time is shown in Fig. 12.

Fig. 12 is a diagram illustrating a result of counting how many diatonic chords in each key are included in each note constituting each chord of the musical-piece before shaping.

In the table in Fig. 12, the number of diatonic chords included in each key (hereinafter, referred to as a "count number") is shown.

For example, as shown in Fig. 11, Fig. 12, the diatonic chords of E minor are included in eight chords in total (C03[Am7], C05[Bm7], C07[D7], C08[B7], C09[Am7], C11[Em7], C13[Em], C14[Em7]), the count number of E minor is 8.

And in this case, as shown in Fig. 12, the count number of E minor is 8, which is the largest. Therefore, in this case, the shaping processing portion 103 estimates that E minor is optimal as a unified key for the musical-piece before shaping.

Subsequently, details of the chord shaping processing at Step S102 will be explained.

As described above, in the chord shaping processing, the shaping processing portion 103 executes the chord shaping processing so that the chord channel in the musical-piece before shaping has only the chords generally used in the unified key to generate a chord-shaped musical piece.

First, the shaping processing portion 103 determines whether each chord constituting the chord channel of the musical-piece before shaping is a chord matching the chord used in the unified key (hereinafter, referred to as a "matched chord") or a chord other than that (hereinafter, referred to as a "mismatched chord").

Then, the shaping processing portion 103 adjusts (shapes) the chord so as to become a diatonic chord of the unified key (hereinafter, referred to as a "unified-key chord") for the mismatched chord in each chord constituting the chord channel of the musical piece before shaping.

At this time, a method in which the shaping processing portion 103 selects the unified-key chord to be modified for each of the mismatched chords (hereinafter, referred to as a "chord to be adjusted") is not limited, but the selection may be made with the following policies.

Basically, in the shaping processing, an amount to be changed (the number of notes whose pitches are to be changed) is preferably as small as possible. The shaping processing portion 103 may select the chord to be adjusted in accordance with the following policies.

First Policy

For each of the mismatched chords, those with the largest number of matched constituent sounds in the unified-key chords are selected as the chords to be adjusted.

Second Policy

Regarding the mismatched chords for which there are a plurality of unified-key chords applicable to the first policy, the unified-key chord with the smallest difference from the mismatched chord (the largest number of matching constituent sounds) in the number of constituent sounds is selected as the chord to be adjusted.

Third Policy

Regarding the mismatched chords for which there are a plurality of unified-key chords applicable to the second policy, a chord with the lowest index in implementation (a management number (ID number) of each chord given in the implementation, for example) is selected as the chord to be adjusted. In this case, a chord selected at random from the plurality of unified-key chords may be set as the chord to be adjusted.

In the musical-piece before shaping shown in Fig. 10, when the unified key is assumed to be E minor, the matched chords are C03[Am7], C05[Bm7], C07[D7], C08[B7], C09[Am7], C11[Em7], C13[Em], C14[Em7], and the mismatched chords are C01[DM7], C02[A7], C04[E], C06[Esus4], C10[E7], C12[A7].

Fig. 13 is a diagram illustrating a result of the chord shaping processing (chord-shaped musical piece) executed for the musical-piece before shaping shown in Fig. 10.

Fig. 13 shows a result in which, in the musical-piece before shaping, the unified key is set as E minor, the mismatched chords C01[DM7], C02[A7], C04[E], C06[Esus4], C10[E7], C12[A7] are modified to the unified-key chords in accordance with the aforementioned policy.

For example, when the aforementioned policy is applied to the chord C01[DM7] (constituent sound DF#AC#) in the first bar, it is changed to F#m7b5 (constituent sound F#ACE), which is a unified-key chord with the largest number of matched constituent notes in the diatonic chord of E minor.

Subsequently, details of the melody shaping processing at Step S103 will be explained.

As described above, in the melody shaping processing, the shaping processing portion 103 executes processing of adjusting (shaping) each note of the melody channel in the chord-shaped musical piece so that it becomes a constituent note of a scale of the corresponding chord (hereinafter, referred to as a "corresponding chord scale). In the following, in the melody channel, a note to be adjusted since it is not the constituent note of the corresponding chord scale is called a "note to be adjusted".

The corresponding chord scale is basically a scale of the corresponding chord (if the corresponding chord is Am7, for example, the corresponding chord scale is a scale of A minor), but if the corresponding chord is an add9 chord, a Lydian scale corresponding to a root note of the corresponding chord may be handled as the corresponding chord scale.

At this time, a method of the shaping processing portion 103 to adjust a pitch of the note to be adjusted (each note of the melody channel) is not limited, but it may be performed in accordance with the following policies. Even if notes are separated, the notes at the same pitch connected by a slur may be regarded as one note (note to be adjusted), and each of the following policies may be applied.

First Policy

For the note to be adjusted, the pitch is adjusted so that it is constituted only by a constituent note of the corresponding chord scale.

Second Policy

For the note to be adjusted across sections of a plurality of chords (hereinafter, referred to as a "plural-chord corresponding note"), the pitch is adjusted so that it is constituted only by a note in common in all the corresponding scales of those plural chords. For example, in a section of the plural-chord corresponding note, if the chord is switched once, the number of corresponding chords becomes two, and if the chord is switched twice, the number of corresponding chords becomes three.

Third Policy

For the plural-chord corresponding note for which there is no pitch satisfying the second policy, it is divided at the end of the chord (timing of switching of the chords), and pitch shaping processing (processing applied from the first policy) is executed from the beginning as a separate note to be adjusted for each of the divided notes, respectively.

Fourth Policy

When the pitch of the note to be adjusted is adjusted, a hierarchical relationship of relative pitches ("any one of three patterns of the pitch goes up", "the pitch goes down", "the pitch is the same") between a note immediately before (hereinafter, referred to as a "note immediately before") and a note immediately after (hereinafter, referred to as a "note immediately after") the note to be adjusted in the musical-piece before shaping is kept.

In the following, it is assumed that a pitch of the note to be adjusted is expressed as PT, a pitch of the note immediately before as PB, and a pitch of the note immediately after is expressed as PA. For example, in the relationship between the pitch PB of the note immediately before and the pitch PT of the note to be adjusted, there are patterns of PB = PT (the pitch is the same), PB > PT (the pitch goes down), and PB < PT (the pitch goes up). Moreover, in the relationship between the pitch PT of the note to be adjusted and the pitch PA of the note immediately after, for example, there are patterns of PT = PA (the pitch is the same), PT > PA (the pitch goes down), and PT < PA (the pitch goes up).

Fifth Policy

If the fourth policy cannot be satisfied only by the pitch adjustment of the note to be adjusted, an adjustment pattern of the pitch which satisfies the fourth policy is determined on the premise that the pitch adjustment is to be made also for the note immediately after.

Sixth Policy

When the pitch adjustment is to be made for the note to be adjusted, a difference between the pitches before and after the adjustment is contained in the predetermined or less ($\pm$ 1 octave or less, for example).

The shaping processing portion 103 preferably adjusts the note to be adjusted in accordance with the policies as above so that it is constituted only by the constituent sound of the corresponding chord scale. In a state where the fourth and fifth policies cannot be complied with, adjustment may be made by excluding these two policies. Moreover, in a state where the sixth policy cannot be satisfied if the fourth and fifth policies are complied with, either one of "exclusion of the sixth policy" and "exclusion of the fourth or the fifth policy" may be applied.

Fig. 14 is a diagram illustrating a result of the melody shaping processing (melody-shaped musical piece) for the chord-shaped musical piece shown in Fig. 13.

As shown in Fig. 14, by means of the melody shaping processing, the F note in the first bar was changed to F# (E minor scale constituent sound and sound with a relationship with sounds before and after unchanged in the pitch) in accordance with the policy described above.

(A-3) Effect of First Embodiment

According to the first embodiment, the following effects can be exerted.

In the music processing system 10 in the first embodiment, a newly composed musical piece can be generated by a generated model using the AI with the input musical-piece data (original music) as an input.

In addition, in the music processing system 10 in the first embodiment, a noise corresponding to the operation parameter c can be mixed in (added to) the latent variable z. Since an arbitrary value can be set to the operation parameter c, the user can select and acquire a content that can be considered to be newly composed from the generated musical pieces with the input musical-piece data (original music) for the generated musical piece as an input by generating a plurality of musical pieces by fluctuating a value of the operation parameter c.

Subsequently, a specific example in which the generated musical piece is changed with the fluctuation of the operation parameter will be explained by using FIGS. 15 to 17.

FIGS. 15 to 17 are diagrams expressing the generated musical piece in a format of a musical score (staff notation), when a value of the operation parameter is fluctuated as 0, 10, 20 with the musical piece in Fig. 4 as the input musical piece, respectively.

As shown in Fig. 15, when the value of the operation parameter is 0, a musical piece which can be estimated to have the same key (F# minor) as or a relative key (A major) to that of the original music (Fig. 4) is generated. Moreover, in the musical score in Fig. 15, a configuration of a melody with the unit of four bars as a group as in the original music (Fig. 4) is seen.

As shown in Fig. 16, when the value of the operation parameter is 10, a musical piece which can be estimated not to have the same key as that of the original music (Fig. 4) but to have a subdominant key (D major) is generated.

As shown in Fig. 17, when the value of the operation parameter is 20, not only that the key is largely different from that of the original music (Fig. 4) but also that the musical piece has totally different type of notes and a tempo in use.

As described above, in the music processing system 10 in the first embodiment, by fluctuating the value of the operation parameter c, the generated musical piece can have a content which can be considered to be newly composed from the input musical-piece data (original music) as an input.

(B) Second Embodiment

Hereinafter, a second embodiment of a music processing system, a music processing program, and a music processing method according to the present disclosure will be described in detail by referring to the drawings.

(B-1) Configuration and Operation of Second Embodiment

Fig. 18 is a block diagram illustrating an entire configuration of a music processing system 10A of the second embodiment.

In Fig. 18, the same signs or corresponding signs are given to the same parts or corresponding parts in Fig. 1 described above.

In the following, a difference from the first embodiment in the second embodiment will be explained.

The music processing system 10A in the second embodiment is different from the first embodiment in a point that the generation processing portion 102 is replaced with a generation processing portion 102A.

The generation processing portion 102A in the second embodiment has the same configuration as that in the first embodiment at the learning of the AI, but a configuration at musical-piece generation after that is different.

Fig. 19 is a diagram illustrating a configuration example at the musical-piece generation in the generation processing portion 102A in the second embodiment.

In Fig. 19, the same signs or corresponding signs are given to the same parts as or corresponding parts to Fig. 3 described above and Fig. 1 described above.

As shown in Fig. 19, in the generation processing portion 102A in the second embodiment, only a latent-variable processing portion 204A and a decoder 202 operate at the musical-piece generation.

The latent-variable processing portion 204A is different from the first embodiment in a point that, at the musical-piece generation, the latent variable z to be supplied to the decoder 202 is generated not by the data from the encoder 201 but on the basis of a numerical value (random number or the like, for example) acquired by predetermined means.

For example, in the formula (1) described above, the latent variable z based on the random number with distribution of 1 may be acquired by setting $\mu = 0$, $\sigma = 1$, l = 1. For example, when the latent variable z is a 256-dimensional vector, a source code (code when described in Python) for the latent-variable processing portion 204A to acquire the latent variable z can be "numpy.random.normal (loc=0.0, scale=1.0, size = 256)".

Note that, in the second embodiment, specific values set to $\sigma$ and I are not limited to the example described above, but various values can be applied.

(B-2) Effect of Second Embodiment

According to the second embodiment, the following effects can be exerted.

In the music processing system 10A of the second embodiment, a musical piece is generated not by an input musical piece but by using the latent variable z acquired by the latent-variable processing portion 204A on the basis of the random number. As a result, in the music processing system 10A of the second embodiment, a new musical piece can be generated without inputting the input musical piece.

(C) Other Embodiments

The present disclosure is not limited to each of the embodiments described above, but modified embodiments as exemplified below can be also cited.

(C-1) In the first embodiment, the operation mode in which the music processing system generates a musical piece on the basis of the input musical-piece vector data (input musical-piece data) and the operation parameter (hereinafter, referred to as a "reference mode") was explained, and in the second embodiment, the operation mode in which the music processing system generates a musical piece on the basis of the random number (hereinafter, referred to as a "random mode") was explained, but a music processing system which handles both of these two operation modes and can change the operation mode on the basis of an operation by a user or the like may be configured.

(C-2) In each of the embodiments described above, it was explained that the generation processing portion 102 includes both the configuration at the learning and the configuration at the musical-piece generation, but in a state where the learning processing has been already completed, the configuration at the learning (the discriminator 203 and the like, for example) does not have to be provided.

[Reference Signs List]

| | |
|---|---|
| 10 | Music processing system |
| 101 | Vectorization processing portion |
| 102 | Generation processing portion |
| 103 | Shaping processing portion |
| 104 | Restoration processing portion |
| 201 | Encoder |
| 202 | Decoder |
| 203 | Discriminator |
| 204 | Latent-variable processing portion |

**Claims**

1. A music processing system, comprising:

   musical-piece generating means which generates a musical piece by using a learning model which performed machine learning on the basis of input data including musical piece data in which a musical score of a musical piece constituted by one channel or more of melodies and one channel or more of chords is described and configuration information indicating attributes of elements constituting the musical piece of the musical piece data; and
   shaping means which shapes the generated musical piece generated by the musical-piece generating means to a musically harmonized content.

2. The music processing system according to claim 1, wherein
   the musical-piece generating means has:

an encoder which outputs an average vector and a distribution vector of a latent variable corresponding to input data by using the learning model on the basis of input data;

latent-variable processing means which generates a latent variable by processing the average vector and the distribution vector; and

a decoder which outputs output data in the same format as that of input data according to the latent variable generated by the latent-variable processing means by using the learning model.

3.  The music processing system according to claim 2, wherein

the musical-piece generating means accepts an input of an operation parameter for operating a nature of a musical piece to be generated together with the input data; and

the latent-variable processing means causes a noise according to a combination of the distribution vector and the operation parameter to be mixed in the latent variable.

4.  A music processing program **characterized by** causing a computer to function as:

musical-piece generating means which generates a musical piece by using a learning model which performed machine learning on the basis of learning data having musical piece data for learning in which a musical score of a musical piece constituted by one channel or more of melodies of and e of chords is described; and

shaping means which shapes the generated musical piece generated by the musical-piece generating means to a musically harmonized content.

5.  A music processing method performed by a music processing system, **characterized in that**

the music processing system includes musical-piece generating means and shaping means;

the musical-piece generating means generates a musical piece by using a learning model which performed machine learning on the basis of learning data having musical piece data for learning in which a musical score of a musical piece constituted by one channel or more of melodies and one channel or more of chords is described; and

the shaping means shapes the generated musical piece generated by the musical-piece generating means to a musically harmonized content.

INPUT MUSICAL-PIECE DATA

CONFIGURATION
INFORMATION

OPERATION PARAMETER

VECTORIZATION PROCESSING PORTION — 101

INPUT MUSICAL-PIECE
VECTOR DATA

— 102

GENERATION PROCESSING PORTION

GENERATED MUSICAL-
PIECE VECTOR DATA

— 103

SHAPING PROCESSING PORTION

SHAPED MUSICAL-PIECE VECTOR
DATA

— 104

RESTORATION PROCESSING PORTION

10

OUTPUT MUSICAL-PIECE DATA

FIG. 1

INPUT MUSICAL-PIECE VECTOR DATA
(SAMPLE FOR LEARNING)

FIG. 2

INPUT MUSICAL-PIECE
VECTOR DATA

OPERATION
PARAMETER

<u>102</u>

ENCODER ⟍ ∼ 201

AVERAGE VECTOR μ

DISTRIBUTION VECTOR σ

204

LATENT-VARIABLE
PROCESSING PORTION

LATENT VARIABLE z

DECODER ⟍ ∼ 202

RESTORED MUSICAL-PIECE VECTOR DATA

# FIG. 3

SAMPLE OF INPUT MUSICAL SCORE

FIG. 4

EP 4 187 532 A1

| | FIRST BAR | SECOND BAR | THIRD BAR | FOURTH BAR | FIFTH BAR | SIXTH BAR | SEVENTH BAR | EIGHTH BAR |
|---|---|---|---|---|---|---|---|---|
| FIRST TIME | 37 | 39 | 32 | 35 | 37 | 39 | 32 | 35 |
| | 0 | 0 | 0 | 0 | 0 | 0 | 0 | 0 |
| | 0 | 0 | 0 | 0 | 0 | 0 | 0 | 0 |
| | 1 | 40 | 1 | 34 | 1 | 40 | 1 | 34 |
| | 0 | 0 | 0 | 0 | 0 | 0 | 0 | 0 |
| | 0 | 0 | 0 | 0 | 0 | 0 | 0 | 0 |
| | 37 | 42 | 32 | 32 | 37 | 42 | 32 | 32 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| SECOND TIME | 44 | 0 | 37 | 0 | 44 | 0 | 37 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| THIRD TIME | 0 | 0 | 0 | 32 | 0 | 0 | 0 | 32 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 42 | 44 | 39 | 34 | 42 | 44 | 39 | 34 |
| | 0 | 0 | 0 | 0 | 0 | 0 | 0 | 0 |
| | 0 | 0 | 0 | 0 | 0 | 0 | 0 | 0 |
| | 44 | 0 | 0 | 0 | 44 | 0 | 0 | 0 |
| | 0 | 0 | 0 | 0 | 0 | 0 | 0 | 0 |
| | 0 | 0 | 0 | 0 | 0 | 0 | 0 | 0 |
| FOURTH TIME | 40 | 39 | 37 | 35 | 40 | 39 | 37 | 35 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 39 | 37 | 35 | 39 | 39 | 37 | 35 | 39 |
| | 0 | 0 | 0 | 0 | 0 | 0 | 0 | 0 |
| | 0 | 0 | 0 | 0 | 0 | 0 | 0 | 0 |
| | 37 | 35 | 34 | 0 | 37 | 35 | 34 | 0 |
| | 0 | 0 | 0 | 0 | 0 | 0 | 0 | 0 |
| | 0 | 0 | 0 | 0 | 0 | 0 | 0 | 0 |

## FIG. 5

| | FIRST BAR | SECOND BAR | THIRD BAR | FOURTH BAR | FIFTH BAR | SIXTH BAR | SEVENTH BAR | EIGHTH BAR |
|---|---|---|---|---|---|---|---|---|
| FIRST TIME | 73 | 59 | 4 | 20 | 82 | 20 | 82 | 20 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| SECOND TIME | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| THIRD TIME | 82 | 59 | 85 | 20 | 82 | 20 | 82 | 20 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| FOURTH TIME | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 0 |
| | 0 | 0 | 0 | 0 | 0 | 0 | 0 | 1 |

# FIG. 6

| ID | MEANING |
|----|---------|
| 0 | STATE IN WHICH STATE OF ID IMMEDIATELY BEFORE CONTINUES. IF ID IMMEDIATELY BEFORE IS 0, STATE IN WHICH STATE FURTHER IMMEDIATELY BEFORE CONTINUES. IF ID IMMEDIATELY BEFORE IS 1, STATE IN WHICH SOUND IS NOT PRODUCED. IN THE OTHER CASES, STATE SOUND OF APPLICABLE PITCH IS CONTINUOUSLY PRODUCED. |
| 1 | STATE IN WHICH NO SOUND IS PRODUCED |
| 2 | STATE IN WHICH SOUND OF PITCH C1 IS PRODUCED |
| : | : |
| 13 | STATE IN WHICH SOUND OF PITCH B1 IS PRODUCED |
| 14 | STATE IN WHICH SOUND Of PITCH C2 IS PRODUCED |
| : | : |
| 25 | STATE IN WHICH SOUND OF PITCH B2 IS PRODUCED |
| 26 | STATE IN WHICH SOUND OF PITCH C3 IS PRODUCED |
| : | : |
| 37 | STATE IN WHICH SOUND OF PITCH B3 IS PRODUCED |
| 38 | STATE IN WHICH SOUND OF PITCH C4 IS PRODUCED |
| : | : |
| 49 | STATE IN WHICH SOUND OF PITCH B4 IS PRODUCED |

# FIG. 7

| ID | MEANING |
|---|---|
| 0 | STATE IN WHICH STATE OF ID IMMEDIATELY BEFORE CONTINUES. |
| | IF ID IMMEDIATELY BEFORE IS 0, STATE IN WHICH STATE FURTHER IMMEDIATELY BEFORE CONTINUES. |
| | IF ID IMMEDIATELY BEFORE IS 1, STATE IN WHICH SOUND IS NOT PRODUCED. |
| | IN THE OTHER CASES, STATE SOUND OF APPLICABLE CHORD IS CONTINUOUSLY PRODUCED. |
| 1 | STATE IN WHICH NO SOUND IS PRODUCED |
| 2 | STATE IN WHICH SOUND OF CHORD C IS PRODUCED |
| : | : |
| 13 | STATE IN WHICH SOUND OF CHORD B IS PRODUCED |
| 14 | STATE IN WHICH SOUND OF CHORD Cm IS PRODUCED |
| : | : |
| 25 | STATE IN WHICH SOUND OF CHORD Bm IS PRODUCED |
| 26 | STATE IN WHICH SOUND OF CHORD Cm(b5) IS PRODUCED |
| : | : |
| 37 | STATE IN WHICH SOUND OF CHORD Bm(b5) IS PRODUCED |
| 38 | STATE IN WHICH SOUND OF CHORD C7 IS PRODUCED |
| : | : |
| 49 | STATE IN WHICH SOUND OF CHORD B7 IS PRODUCED |
| 50 | STATE IN WHICH SOUND OF CHORD CM7 IS PRODUCED |
| : | : |
| 61 | STATE IN WHICH SOUND OF CHORD BM7 IS PRODUCED |
| 62 | STATE IN WHICH SOUND OF CHORD Cm7 IS PRODUCED |
| : | : |
| 73 | STATE IN WHICH SOUND OF CHORD Bm7 IS PRODUCED |
| 74 | STATE IN WHICH SOUND OF CHORD Cm7(b5) IS PRODUCED |
| : | : |
| 85 | STATE IN WHICH SOUND OF CHORD Bm7(b5) IS PRODUCED |
| 86 | STATE IN WHICH SOUND OF CHORD Csus4 IS PRODUCED |
| : | : |
| 97 | STATE IN WHICH SOUND OF CHORD Bsus4 IS PRODUCED |
| 98 | STATE IN WHICH SOUND OF CHORD Cadd9 IS PRODUCED |
| : | : |
| 109 | STATE IN WHICH SOUND OF CHORD Badd9 IS PRODUCED |

# FIG. 8

START

S101 KEY ESTIMATION PROCESSING

S102 CHORD SHAPING PROCESSING

S103 MELODY SHAPING PROCESSING

END

FIG. 9

SAMPLE OF GENERATED MUSICAL PIECE

FIG. 10

EP 4 187 532 A1

CHORD PROGRESSION OF SAMPLE OF GENERATED MUSICAL PIECE

FIG. 11

| KEY | CHORD PROGRESSION OF SAMPLE OF GENERATED MUSICAL PIECE |
|---|---|
| C major | 5 |
| C# major | 0 |
| D major | 7 |
| Eb major | 0 |
| E major | 2 |
| F major | 2 |
| F# major | 0 |
| G major | 7 |
| Ab major | 0 |
| A major | 4 |
| Bb major | 0 |
| B major | 1 |
| C minor | 0 |
| C# minor | 2 |
| D minor | 4 |
| Eb minor | 0 |
| E minor | 8 |
| F minor | 0 |
| F# minor | 4 |
| G minor | 1 |
| Ab minor | 1 |
| A minor | 6 |
| Bb minor | 0 |
| B minor | 7 |

# FIG. 12

SAMPLE OF SHAPED MUSICAL PIECE

FIG. 13

EP 4 187 532 A1

SAMPLE OF MELODY-SHAPED MUSICAL PIECE

FIG. 14

EP 4 187 532 A1

SAMPLE OF GENERATED MUSICAL PIECE (OPERATION PARAMETER = 0)

FIG. 15

EP 4 187 532 A1

SAMPLE OF GENERATED MUSICAL PIECE (OPERATION PARAMETER = 10)

FIG. 16

EP 4 187 532 A1

SAMPLE OF GENERATED MUSICAL PIECE (OPERATION PARAMETER = 20)

FIG. 17

EP 4 187 532 A1

INPUT MUSICAL-
PIECE DATA

CONFIGURATION
INFORMATION

10A

VECTORIZATION PROCESSING PORTION     101

INPUT MUSICAL-PIECE
VECTOR DATA

102A

GENERATION PROCESSING PORTION

GENERATED MUSICAL-
PIECE VECTOR DATA

103

SHAPING PROCESSING PORTION

SHAPED MUSICAL-PIECE VECTOR DATA

104

RESTORATION PROCESSING PORTION

OUTPUT MUSICAL-PIECE DATA
(SHAPED MUSICAL-PIECE DATA)

# FIG. 18

<u>102</u>

102A

204A

LATENT-VARIABLE
PROCESSING PORTION

LATENT VARIABLE z

202

DECODER

RESTORED MUSICAL-PIECE

# FIG. 19

**INTERNATIONAL SEARCH REPORT**

| International application No. |
| --- |
| PCT/JP2021/026976 |

**A. CLASSIFICATION OF SUBJECT MATTER**
Int. Cl. G10G1/04(2006.01)i
FI: G10G1/04

According to International Patent Classification (IPC) or to both national classification and IPC

**B. FIELDS SEARCHED**

Minimum documentation searched (classification system followed by classification symbols)
Int. Cl. G10G1/00-3/04, G10H1/00-1/46

Documentation searched other than minimum documentation to the extent that such documents are included in the fields searched
Published examined utility model applications of Japan     1922-1996
Published unexamined utility model applications of Japan   1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | WO 2020/080239 A1 (SONY CORP.) 23 April 2020 (2020-04-23), paragraphs [0021]-[0067], fig. 1, 3, 5 | 1-2, 4-5<br>3 |
| Y | JP 2002-202779 A (YAMAHA CORP.) 19 July 2002 (2002-07-19), paragraphs [0159]-[0164], fig. 3 | 1-2, 4-5 |
| Y | 梅田弘之, エンジニアなら知っておきたいAIのキホン, 第1版, 東京:株式会社インプレス, 2019, p. 226-227, ISBN 978-4-295-00535-3, in particular, section 2, chapter 14, rVAE (Variational Autoencoder) non-official translation (UMEDA, Hiroyuki. AI Fundamentals an Engineer Should Know. First ed. Tokyo: Impress Corp.) | 2 |

☒ Further documents are listed in the continuation of Box C.      ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 02.09.2021 | 14.09.2021 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2021/026976

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2020-003535 A (CASIO COMPUTER CO., LTD.) 09 January 2020 (2020-01-09), entire text, all drawings | 1-5 |
| A | KR 10-2019-0010135 A (MINDSET INC.) 30 January 2019 (2019-01-30), entire text, all drawings | 1-5 |
| E, A | WO 2021/145213 A1 (SONY GROUP CORP.) 22 July 2021 (2021-07-22), entire text, all drawings | 1-5 |

Form PCT/ISA/210 (continuation of second sheet) (January 2015)

INTERNATIONAL SEARCH REPORT

Information on patent family members

International application No.

PCT/JP2021/026976

| Patent Documents referred to in the Report | Publication Date | Patent Family | Publication Date |
|---|---|---|---|
| WO 2020/080239 A1 | 23.04.2020 | CN 111465979 A paragraphs [0054]-[0101], fig. 1, 3, 5 | |
| JP 2002-202779 A | 19.07.2002 | JP 10-49154 A paragraphs [0163]-[0168], fig. 3 | |
| JP 2020-003535 A | 09.01.2020 | (Family: none) | |
| KR 10-2019-0010135 A | 30.01.2019 | (Family: none) | |
| WO 2021/145213 A1 | 22.07.2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009020323 A